# EUROPEAN PATENT APPLICATION

(11) **EP 4 498 326 A1**
(43) Date of publication of application: **29.01.2025**
(21) Application number: 23893340.2
(22) Date of filing: 01.09.2023
(51) Int. Cl.: G06T 15/60, G06T 15/50, H04N 5/14

(54) **IMAGE PROCESSING METHOD AND APPARATUS**

(30) Priority: 21.11.2022 CN 202211454684
(71) Applicant: Honor Device Co., Ltd., Shenzhen, Guangdong 518040 (CN)
(72) Inventor: JIANG, Chunping, Shenzhen, Guangdong 518040 (CN); LIU, Zhichao, Shenzhen, Guangdong 518040 (CN)
(74) Representative: Goddar, Heinz J.
(86) International application number: PCT/CN2023/116594
(87) International publication number: WO 2024/109247

(57) **Abstract**

This application provides an image processing method and apparatus, applied to an electronic device. The method includes: obtaining a first main image from a first real image and obtaining a second main image from a second real image, where the first real image and the second real image are images obtained through rendering by the electronic device; performing motion vector calculation on the first main image and the second main image, to obtain a motion vector; warping an environment in a target main image and a moving object in the target main image based on the motion vector, to generate an environment in a predicted frame and a moving object in the predicted frame, where the target main image is a frame of main image in the first main image and the second main image; and multiplexing image data of a shadow of the moving object in the target main image into the predicted frame, to generate a shadow of the moving object in the predicted frame. In this way, a shadow jitter problem in the predicted frame is alleviated, a difference between the predicted frame and a real image is reduced, and user experience is improved.

## Description

This application claims priority to Chinese Patent Application No. 202211454684.3, entitled "IMAGE PROCESSING METHOD AND APPARATUS" and filed with the China National Intellectual Property Administration on November 21, 2022, which is incorporated herein by reference in its entirety.

### TECHNICAL FIELD

This application relates to the field of image processing technologies, and in particular, to an image processing method and apparatus.

### BACKGROUND

A predicted frame technology is a mainstream technology in image rendering, and overheads of image rendering may be reduced if an electronic device uses the predicted frame technology. However, to enhance immersive experience of a user, shadow rendering is added in the electronic device. The predicted frame technology causes a shadow jitter problem in a predicted frame, increasing a difference between the predicted frame and a real image and greatly reducing user experience. The real image is an image generated through rendering by the electronic device based on rendering logic, and the real image is used for generating the predicted frame.

### SUMMARY

This application provides an image processing method and apparatus, and an objective is to resolve a shadow jitter problem in a predicted frame, to reduce a difference between the predicted frame and a real image and improve user experience. To achieve the foregoing objective, this application provides the following technical solutions.

According to a first aspect, this application provides an image processing method, applied to an electronic device and including: obtaining a first main image from a first real image and obtaining a second main image from a second real image, where the first real image and the second real image are images obtained through rendering by the electronic device; performing motion vector calculation on the first main image and the second main image, to obtain a motion vector; warping an environment in a target main image and a moving object in the target main image based on the motion vector, to generate an environment in a predicted frame and a moving object in the predicted frame, where the target main image is a frame of main image in the first main image and the second main image; and multiplexing image data of a shadow of the moving object in the target main image into the predicted frame, to generate a shadow of the moving object in the predicted frame. In this way, the shadow of the moving object in the predicted frame may be extracted from the environment in the predicted frame, so that the shadow of the moving object in the predicted frame can be generated independently, and the shadow of the moving object in the predicted frame is generated through multiplexing the image data of the shadow of the moving object in the target main image into the predicted frame instead of depending on the motion vector. This alleviates a shadow jitter problem in the predicted frame, reduces a difference between the predicted frame and a real image, and improves user experience.

In some examples, the warping an environment in a target main image and a moving object in the target main image based on the motion vector, to generate an environment in a predicted frame and a moving object in the predicted frame, and the multiplexing image data of a shadow of the moving object in the target main image into the predicted frame, to generate a shadow of the moving object in the predicted frame include: warping the environment in the target main image and the moving object in the target main image, to generate a first intermediate image, where the first intermediate image includes an environment and a moving object; and multiplexing the image data of the shadow of the moving object in the target main image into the first intermediate image, to cause the first intermediate image to include the environment, the moving object, and the shadow of the moving object. After the first intermediate image including the environment, the moving object, and the shadow of the moving object is obtained, image completion is performed on the first intermediate image, to obtain a second intermediate image; and then post-processing is performed on the second intermediate image, and a user interface image corresponding to the target main image and a processed second intermediate image are fused, to obtain the predicted frame. Because the moving object and the shadow of the moving object do not change after the first intermediate image is obtained, the moving object in the first intermediate image may be the moving object in the predicted frame, and the shadow of the moving object in the first intermediate image may be the shadow of the moving object in the predicted frame. The environment in the first intermediate image is completed during image completion. Therefore, the predicted frame includes a completed environment in the first intermediate image, namely, an environment in the second intermediate image.

In a possible implementation, the multiplexing image data of a shadow of the moving object in the target main image into the predicted frame includes: determining, for each pixel point in the predicted frame, based on a location of the shadow of the moving object in the target main image, whether the pixel point is located in the shadow of the moving object in the target main image; and multiplexing, after determining that the pixel point is located in the shadow of the moving object in the target main image, a pixel value of the pixel point in the target main image, where the pixel value of the pixel point in the target main image is image data of the pixel point in the target main image; or keeping a pixel value of the pixel point unchanged after determining that the pixel point is not located in the shadow of the moving object in the target main image. In this way, for the pixel point located in the shadow of the moving object in the target main image in the predicted frame, the pixel value of the pixel point in the target main image is multiplexed, so that both the location of the shadow of the moving object in the target main image and the image data of the shadow of the moving object in the target main image are multiplexed, to fuse the shadow of the moving object in the target main image into the predicted frame. This avoids that the motion vector used in the environment is continuously used to generate the shadow of the moving object in the predicted frame, alleviates the shadow jitter problem in the predicted frame, reduces the difference between the predicted frame and the real image, and improves user experience. Because the location of the shadow of the moving object in the target main image is multiplexed into the predicted frame, a location of the shadow of the moving object in the predicted frame is the same as the location of the shadow of the moving object in the target main image. When the image data of the shadow of the moving object in the target main image is multiplexed, the shadow of the moving object has the same shape, color, and brightness in the predicted frame and the target main image.

In a possible implementation, the motion vector is used for recording a movement speed and a movement direction of each pixel point in the target main image, and the warping an environment in a target main image and a moving object in the target main image based on the motion vector, to generate an environment in a predicted frame and a moving object in the predicted frame includes: moving each pixel point in the target main image based on the movement speed and the movement direction of the pixel point in the target main image; determining, during movement of the pixel point, based on a location of the shadow of the moving object in the target main image, whether the pixel point is located in the shadow of the moving object in the predicted frame; and setting a pixel value of the pixel point to a preset value after determining that the pixel point is located in the shadow of the moving object in the predicted frame; or setting a pixel value of the pixel point to a pixel value of the pixel point in the target main image after determining that the pixel point is not located in the shadow of the moving object in the predicted frame. In this way, the shadow of the moving object in the predicted frame and another object in the predicted frame are distinguished by using the preset value, so that the shadow of the moving object in the predicted frame is removed by using the preset value and the location of the shadow of the moving object can be marked, to reserve the shadow of the moving object for the predicted frame, so that the image data of the shadow of the moving object in the target main image may be multiplexed into the predicted frame.

In a possible implementation, the preset value includes preset transparency, and the preset transparency is different from transparency of another pixel point in the target main image. Distinguishing is performed by using the preset transparency.

In a possible implementation, a process of determining the location of the shadow of the moving object in the target main image includes: comparing to-be-compared pixel points with a same location in an ambient-shadow texture image and a moving-object-shadow texture image, where the ambient-shadow texture image is generated based on image data of an ambient shadow in the target main image, and the moving-object-shadow texture image is generated based on the image data of the shadow of the moving object in the target main image; marking, after determining that the to-be-compared pixel point is located in a shadow area of the moving object but is not located in the ambient shadow, that the to-be-compared pixel point is located in the shadow area of the moving object; or marking, after determining that the to-be-compared pixel point is located in a shadow area of the moving object and is located in the ambient shadow, that the to-be-compared pixel point is not located in the shadow area of the moving object; and determining the location of the shadow of the moving object in the target main image based on the to-be-compared pixel point marked as being located in the shadow area of the moving object, where the image data of the shadow of the moving object in the target main image includes a pixel value of the to-be-compared pixel point at the location in the target main image. In some examples, the image data of the shadow of the moving object in the target main image is the same as the image data of the shadow of the moving object in the target main image. By using the ambient-shadow texture image and the moving-object-shadow texture image, the location of the shadow of the moving object in the target main image can be determined based on a principle that "the shadow of the moving object is not displayed in the target main image when the shadow of the moving object is located in the ambient shadow", to prepare for determining the location of the shadow of the moving object in the predicted frame, so that the image data of the shadow of the moving object can be multiplexed.

In a possible implementation, if a pixel value of the to-be-compared pixel point in the moving-object-shadow texture image is greater than a pixel value of the to-be-compared pixel point in the ambient-shadow texture image, it is determined that the to-be-compared pixel point is located in the shadow area of the moving object but is not located in the ambient shadow; or if a pixel value of the to-be-compared pixel point in the moving-object-shadow texture image is less than or equal to a pixel value of the to-be-compared pixel point in the ambient-shadow texture image, it is determined that the to-be-compared pixel point is located in the shadow area of the moving object and is located in the ambient shadow.

In a possible implementation, the pixel value of the to-be-compared pixel point includes at least one of an R channel value, a G channel value, and a B channel value of the to-be-compared pixel point. In some examples, the pixel value of the to-be-compared pixel point includes one of the R channel value, the G channel value, and the B channel value, which may reduce storage space. In some examples, the pixel value of the to-be-compared pixel point includes two or three of the R channel value, the G channel value, and the B channel value. In this case, when pixel values are compared, pixel values of to-be-compared pixel points may first be fused (for example, weighted averaged), to obtain a value, and then values are compared, to comprehensively consider influence of different channel values.

In a possible implementation, before the obtaining a first main image from a first real image and obtaining a second main image from a second real image, the method further includes: obtaining the image data of the ambient shadow and the image data of the shadow of the moving object when rendering a real image corresponding to the target main image, where the image data of the ambient shadow and the image data of the shadow of the moving object are used for determining the location of the shadow of the moving object in the target main image, and the location of the shadow of the moving object in the target main image and the image data of the shadow of the moving object are used for obtaining image data of a shadow of a to-be-multiplexed moving object in the target main image. In this way, during rendering of the real image corresponding to the target main image, the image data of the ambient shadow and the image data of the shadow of the moving object are intercepted, to prepare for multiplexing.

In a possible implementation, the obtaining the image data of the ambient shadow and the image data of the shadow of the moving object when rendering a real image corresponding to the target main image includes: rendering an ambient shadow of the real image, to generate the image data of the ambient shadow, where the image data of the ambient shadow is stored in a first frame buffer; creating a second frame buffer and a third frame buffer; copying the image data of the ambient shadow stored in the first frame buffer into the second frame buffer; changing a frame buffer bound to the real image from the first frame buffer to the third frame buffer; and rendering a shadow of a moving object in the real image, to generate the image data of the shadow of the moving object, where the image data of the shadow of the moving object is stored in the third frame buffer. In this way, the image data of the ambient shadow and the image data of the shadow of the moving object are respectively stored in different frame buffers, to prevent the two parts of image data from overlapping and being difficult to distinguish, thereby facilitating use of the image data of the ambient shadow and the image data of the shadow of the moving object.

In a possible implementation, the obtaining the image data of the ambient shadow and the image data of the shadow of the moving object when rendering a real image corresponding to the target main image further includes: changing the frame buffer bound to the real image from the third frame buffer to the first frame buffer after rendering the shadow of the moving object in the real image; and rendering the shadow of the moving object in the real image again, to generate the image data of the shadow of the moving object, where the image data of the shadow of the moving object is stored in the first frame buffer. When the image data of the ambient shadow and the image data of the shadow of the moving object are intercepted, the image data of the ambient shadow and the image data of the shadow of the moving object can be stored in the first frame buffer bound to the real image. This ensures accuracy of the image data stored in the first frame buffer and prevents the real image (mainly the target main image) from missing a shadow.

In a possible implementation, the copying the image data of the ambient shadow stored in the first frame buffer into the second frame buffer includes: invoking a glBlitFramebuffer function to copy the image data of the ambient shadow stored in the first frame buffer into the second frame buffer.

In a possible implementation, the changing a frame buffer bound to the real image from the first frame buffer to the third frame buffer includes: invoking the glBlitFramebuffer function to change the frame buffer bound to the real image from the first frame buffer to the third frame buffer.

In a possible implementation, the method further includes: performing image completion on the predicted frame after generating the shadow of the moving object in the predicted frame.

According to a second aspect, this application provides an electronic device, including: one or more processors and a memory, where the memory is configured to store computer program code, the computer program code includes computer instructions, and when the one or more processors execute the computer instructions, the electronic device performs the image processing method according to the first aspect.

According to a third aspect, this application provides a computer-readable storage medium, configured to store a computer program, where the computer program, when executed, is specifically used for implementing the image processing method according to the first aspect.

In this application, based on the implementations according to the foregoing aspects, further combination may be performed, to provide more implementations.

### BRIEF DESCRIPTION OF DRAWINGS

FIG. 1 is a schematic diagram of generating a predicted frame according to this application;
FIG. 2 is a structural diagram of hardware of an electronic device according to this application;
FIG. 3 is a flowchart of generating a real image according to this application;
FIG. 4 is a flowchart of generating a predicted frame according to this application;
FIG. 5 is a flowchart of obtaining image data of an ambient shadow and image data of a shadow of a moving object in a real image according to this application;
FIG. 6 is a flowchart of determining a location of a shadow of a moving object in a real image according to this application;
FIG. 7 is a flowchart of removing a shadow of a moving object generated based on a motion vector according to this application;
FIG. 8 is a flowchart of multiplexing image data of a shadow of a moving object in a real image according to this application; and
FIG. 9 is a schematic diagram of multiplexing a shadow according to this application.

### DESCRIPTION OF EMBODIMENTS

The following clearly and completely describes technical solutions in embodiments of this application with reference to the accompanying drawings in embodiments of this application. Terms used in the following embodiments are only intended to describe particular embodiments, and are not intended to limit this application. As used in this specification and the claims of this application, a singular expression form, "one", "a", "said", "foregoing", "the", or "this", is intended to also include an expression form such as "one or more", unless clearly indicated to the contrary in the context. It should be further understood that in embodiments of this application, "one or more" refers to one, two, or more than two. "And/or" describes an association relationship between associated objects and represents that three relationships may exist. For example, A and/or B may represent: only A exists, both A and B exist, and only B exists, where A and B may be singular or plural. The character "/" generally indicates an "or" relationship between the associated objects.

Reference of "one embodiment", "some embodiments", or the like described in the specification means that a specific feature, structure, or characteristic described with reference to the embodiment is included in one or more embodiments of this application. In this way, phrases such as "in one embodiment", "in some embodiments", "in other embodiments", "in some other embodiments," and the like that appear in different places in the specification do not necessarily all refer to the same embodiment, but rather mean "one or more but not all embodiments," unless specifically emphasized otherwise. Terms "comprise", "comprising", "including", and variants thereof all mean "including but not limited to" unless specifically emphasized otherwise.

"A plurality of" involved in embodiments of this application means being greater than or equal to two. It is to be noted that, in descriptions of embodiments of this application, terms such as "first" and "second" are merely used for a purpose of distinguishing descriptions and are neither intended to indicate or imply relative importance nor intended to indicate or imply a sequence.

In a process in which a user uses an electronic device, the electronic device may present a multimedia streaming file to the user through a display screen, to provide the user with rich visual experience. An example in which a multimedia stream is a video stream is used. The video stream may include a plurality of frames of images. For example, the video stream may include N frames of images, for example, a first frame, a second frame, ..., and an N^{th} frame. The electronic device may display the first frame, the second frame, ..., and the N^{th} frame separately when presenting the video stream. To play the video stream, an application may issue rendering commands for different frames of images to the electronic device. The electronic device may render the frames of images based on the rendering commands, to obtain rendering results (for example, image data) of the frames of images, and perform displaying based on the rendering results.

As the application is updated iteratively, a procedure in which the electronic device performs image rendering based on the rendering command becomes more and more complicated, resulting in an increasing resource load on the electronic device. In addition, battery life of the electronic device is limited. Reducing unnecessary image rendering costs while ensuring that image quality is not affected has become a major challenge. For this, a predicted frame technology is developed. The predicted frame technology may be generating a frame of image based on two frames of images, in other words, generating a frame of predicted frame based on two frames of images. For distinction, the image for generating the predicted frame is referred to as a real image.

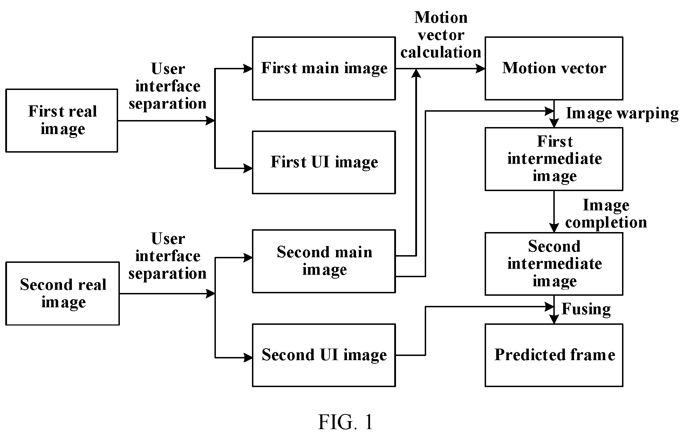

FIG. 1 is a schematic diagram of generating a predicted frame. A procedure of generating the predicted frame is that an electronic device performs user interface (User Interface, UI) separation on a first real image and a second real image, to obtain a first main image of the first real image, a first UI image of the first real image, a second main image of the second real image, and a second UI image of the second real image. The first real image is a previous frame of image of the second real image. The UI image includes a UI interface in the real image. The main image includes objects such as an environment in the real image, an ambient shadow, a moving object, and a shadow of the moving object. The electronic device performs motion vector (Motion Vector, MV) calculation based on the first main image and the second main image, to obtain a motion vector. The motion vector indicates a movement direction and a movement speed of each object in the second main image. Image warping (ImageWarp) is performed on the second main image based on the motion vector, to obtain a first intermediate image, where ImageWarp is moving each object in the second main image by using the motion vector. Because movement speeds and movement directions of objects in the second main image are different, an image data loss occurs in the first intermediate image. Therefore, after the first intermediate image is obtained, image completion (HoleFilling) is performed on the first intermediate image, to obtain a second intermediate image. The second intermediate image and the second UI image are fused (to be specific, the second UI image is attached to the second intermediate image), to generate the predicted frame. Generating the predicted frame based on the first real image and the second real image is implemented.

In some examples, the predicted frame may be an intermediate frame of the first real image and the second real image. In some examples, the predicted frame may be a next frame of image of the second real image. In addition, after obtaining the motion vector, the electronic device may perform ImageWarp on the first main image based on the motion vector, to obtain the first intermediate image. Correspondingly, after the second intermediate image is obtained, the second intermediate image and the first UI image are fused, to generate the predicted frame.

To enhance immersive experience of the user, the electronic device may add shadow rendering in image rendering. In other words, for moving objects in the first real image and the second real image, the electronic device renders shadows for the moving objects, and the shadows move with movement of the moving objects. For example, for a character in a game application, a shadow is rendered for the character, and the shadow of the character moves with the character when the character moves. In this case, when a predicted frame of the character is generated, the predicted frame also has a shadow. However, in addition to the moving object and the shadow of the moving object, a frame of image further includes an environment. The environment is a scene in which the moving object is located, and the electronic device also renders a shadow for the environment. The shadow is referred to as an ambient shadow. When the electronic device generates the predicted frame, the shadow of the moving object moves based on a movement direction and a movement speed of the environment, and a phenomenon of incorrect movement of the shadow of the moving object exists. As a result, the predicted frame has a shadow jitter problem during movement of the moving object, a difference between the predicted frame and the real image is increased, and user experience is greatly reduced.

For this problem, this application provides an image processing method. During generation of a predicted frame, image data of a shadow of a moving object in a real image is multiplexed into the predicted frame, to generate a shadow of a moving object in the predicted frame. The moving object, an environment, and an ambient shadow in the predicted frame are generated by using a motion vector, a main image of a frame of real image, and a UI image of the real image. For example, image data of a shadow of a moving object in a first real image or a second real image is multiplexed.

To multiplex the image data of the shadow of the moving object in the real image, the shadow of the moving object generated based on the motion vector is removed during the generation of the predicted frame. In addition, when rendering the real image, an electronic device obtains the image data of the shadow of the moving object in the real image and a location of the shadow of the moving object in the real image, where the location of the shadow of the moving object in the real image is for determining a location of the shadow of the moving object in the predicted frame, and the image data of the shadow of the moving object in the real image is for multiplexing in the predicted frame. In this way, the shadow of the moving object in the predicted frame is generated through multiplexing the image data of the shadow of the moving object in the real image into the predicted frame instead of depending on the movement direction and the movement speed of the environment. This alleviates a shadow jitter problem in the predicted frame, reduces a difference between the predicted frame and the real image, and improves user experience. A main image of the real image includes the shadow of the moving object, the multiplexing the image data of the shadow of the moving object in the real image may be multiplexing the image data of the shadow of the moving object in the main image of the real image, and the location of the shadow of the moving object in the real image may be a location of the shadow of the moving object in the main image. The multiplexed image data of the shadow of the moving object in the main image may alternatively be referred to as image data of the shadow of the moving object in the main image.

Logic of shadow rendering of an application is that when the shadow of the moving object is located in the ambient shadow, the shadow of the moving object is not displayed in the real image, and therefore, a case in which the shadow is located in both the shadow of the moving object and the ambient shadow is removed when determining the location of the shadow of the moving object in the real image. Therefore, in some examples, the image data of the shadow of the moving object in the main image is image data located in the shadow of the moving object but not located in the ambient shadow, in other words, partial image data of the shadow of the moving object in the main image. For example, all image data of the shadow of the moving object is obtained in the following step S306, and the image data of the shadow of the moving object in the main image is partial image data of the all image data obtained in step S306. In some examples, the image data of the shadow of the moving object in the main image is the same as the all image data obtained in step S306.

The solutions provided in embodiments of this application are described below in detail with reference to the accompanying drawings.

the image processing method provided in embodiments of this application may be applied to an electronic device of a user. The electronic device may be a device that can provide a network access. For example, the electronic device may be a device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a smartwatch. A specific form of the electronic device is not specially limited in this application. In some embodiments, the electronic device may have a display function. For example, the electronic device may generate a predicted frame based on a first real image and a second real image, display the predicted frame, and display the first real image and the second real image.

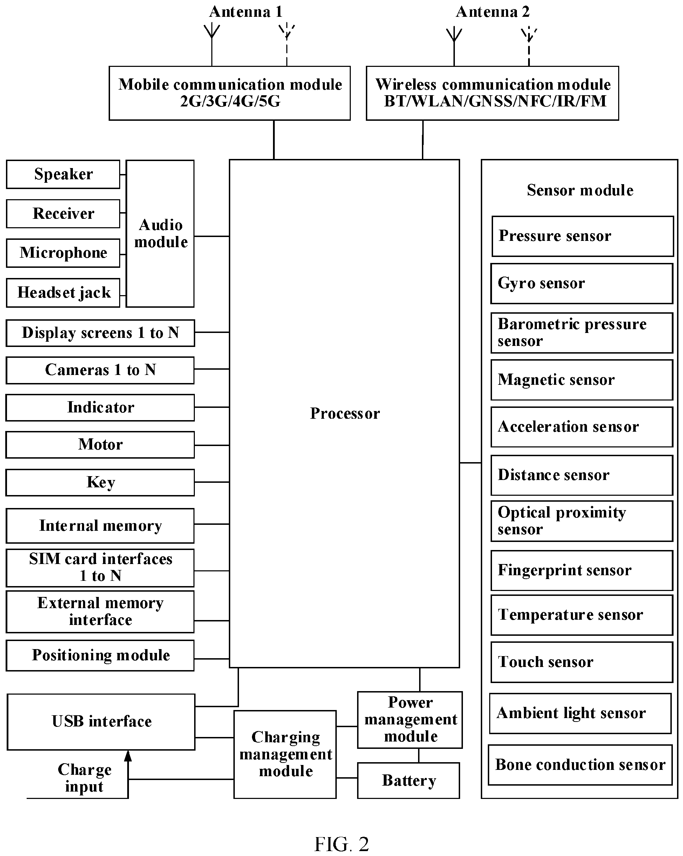

As shown in FIG. 2, the electronic device may include a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display screen, a subscriber identification module (Subscriber Identity Module, SIM) card interface, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the schematic structure in embodiments of this application constitutes no specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

The processor may include one or more processing units. For example, the processor may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be independent components, or may be integrated into one or more processors. The processor is a nerve center and a command center of the electronic device. The controller may generate an operating control signal based on instruction operation code and a sequence signal, to complete control of fetching and executing instructions.

The external memory interface may be configured to be connected to an external storage card, for example, a micro SD card, to expand a storage capability of the electronic device. The external storage card communicates with the processor by using the external memory interface, to implement a data storage function. The internal memory may be configured to store computer executable program code, and the executable program code includes instructions. The processor runs the instructions stored in the internal memory, to perform various function applications and data processing of the electronic device. For example, in embodiments of this application, the processor runs the instructions stored in the internal memory, to cause the electronic device to perform the image processing method provided in embodiments of this application.

The electronic device implements the display function by using the GPU, the display screen, the application processor, and the like. The GPU is a microprocessor for image processing, and is connected to the display screen and the application processor. The GPU is configured to perform mathematical and geometric calculation for image rendering. The processor may include one or more GPUs, and execute program instructions to generate or change display information.

The display screen is configured to display an image, a video, or the like. The display screen includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flex light-emitting diode (flex light-emitting diode, FLED), a Miniled, a MicroLed, a Micro-oled, a quantum dot light-emitting diode (quantum dot light emitting diodes, QLED), or the like. In some embodiments, the electronic device may include one or N display screens. N is a positive integer greater than 1.

A series of graphical user interfaces (graphical user interface, GUI) may be displayed on the display screen of the electronic device, and all the GUIs are main screens of the electronic device. Generally, dimensions of the display screen of the electronic device are fixed, and only a limited quantity of controls can be displayed on the display screen of the electronic device. A control is a GUI element, is a software component included in an application, and controls all data processed by the application and an interaction operation related with the data. The user may interact with the control through a direct manipulation (direct manipulation), to read or edit related information of the application. Generally, the control may include visual interface elements such as an icon, a button, a menu, a tab, a text box, a dialog box, a status bar, a navigation bar, and a Widget. For example, in embodiments of this application, the display screen may display a video file including a specified action, and the like.

In some embodiments, the processor includes a CPU and the GPU. The CPU may generate a rendering instruction stream based on rendering logic of the application, and delivers the rendering instruction stream to the GPU, so that the GPU performs corresponding rendering based on the rendering instruction stream. The CPU may send rendering instructions of the rendering instruction stream to the GPU one by one. In some examples, the CPU may send the rendering instruction to the GPU again after receiving a response of the GPU. In some examples, after sending a rendering instruction, the CPU continues to send a next rendering instruction without waiting for the response of the GPU. For specifics, refer to a setting for the rendering instruction by the CPU.

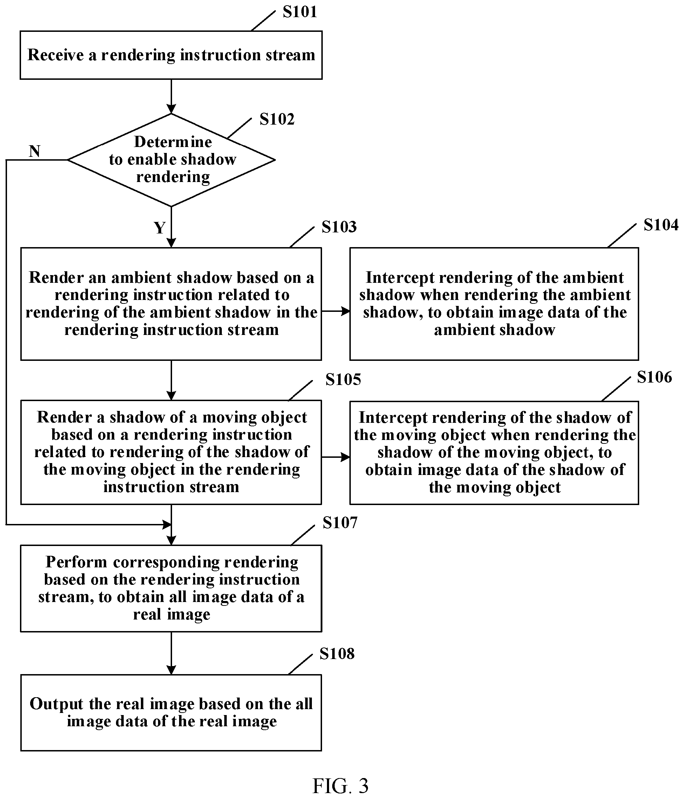

In embodiments of this application, during rendering of the real image, the GPU may obtain the image data of the shadow of the moving object in the real image, to multiplex this part of image data when generating the predicted frame. FIG. 3 shows a procedure of generating a real image in the image processing method provided in embodiments of this application. That image data of a shadow of a moving object in the real image is obtained in a process in which the real image is generated may include the following steps.

S101: Receive a rendering instruction stream. The rendering instruction stream includes at least one rendering instruction, and the rendering instruction indicates the GPU to perform corresponding rendering, for example, indicates the GPU to render a moving object in the real image or indicates the GPU to render an environment in the real image.

S102: Determine, based on the rendering instruction stream, whether to enable shadow rendering, and if enabling the shadow rendering, perform step S103; or if not enabling the shadow rendering, perform step S107.

In embodiments of this application, offline rendering analysis is performed on the application in advance, an invoking rule of the rendering instruction and a characteristic of the rendering instruction when the application enables shadow rendering are compared with those when the application disables shadow rendering, to obtain a determining condition used by the application to identify enabling of shadow rendering. After the rendering instruction stream is received, whether information carried by the rendering instruction stream satisfies the determining condition is determined. If the information satisfies the determining condition, it is determined that shadow rendering is enabled. If the information does not satisfy the determining condition, it is determined that shadow rendering is disabled.

For example, in some examples, when the application enables shadow rendering, the application invokes at least one of a specified program, a specified resource, and a specified rendering instruction. In this way, the determining condition may record information invoked when the application enables shadow rendering. If the application invokes the specified program when enabling shadow rendering, the determining condition may record a label (label) of the specified program, to identify the specified program by using the label. For example, the label of the specified program may be a program name of the specified program. If the application invokes the specified resource when enabling shadow rendering, the determining condition may record a resource label of the specified resource, to identify the specified resource by using the resource label. For example, the resource label may be a resource name or the like. If the application invokes the specified instruction when enabling shadow rendering, the determining condition may record the specified instruction.

For example, the game application invokes glClearColor (1.0, 1.0, 1.0, 0.0) when enabling shadow rendering. Therefore, the determining condition is glClearColor (1.0, 1.0, 1.0, 0.0), requiring that glClearColor (R, G, B, A) is invoked and (RGBA == 1.0, 1.0, 1.0, 0.0). In this way, when the rendering instruction-glClearColor (1.0, 1.0, 1.0, 0.0) exists in the rendering instruction stream, it is determined that shadow rendering is enabled, where R, G, B, A are respectively red, green, blue, and transparency.

S103: Render an ambient shadow (Ambient Shadow) based on a rendering instruction (ScreenSpaceShadow Ambient Shadow) related to rendering of the ambient shadow in the rendering instruction stream. Rendering the ambient shadow is for generating image data of the ambient shadow.

S104: Intercept rendering of the ambient shadow when rendering the ambient shadow, to obtain the image data of the ambient shadow.

S105: Render the shadow (Human Shadow) of the moving object based on a rendering instruction (ScreenSpaceShadow Human Shadow) related to rendering of the shadow of the moving object in the rendering instruction stream. Rendering the shadow of the moving object is for generating image data of the shadow of the moving object.

S106: Intercept rendering of the shadow of the moving object when rendering the shadow of the moving object, to obtain the image data of the shadow of the moving object.

S107: Perform corresponding rendering based on the rendering instruction stream, to obtain all image data of the real image. Rendering of the ambient shadow and the shadow of the moving object is completed through steps S103 to S106. A frame of real image may further include a moving object, an environment, a UI interface, and the like. Therefore, in some examples, the rendering herein is mainly rendering of the image except the ambient shadow and the shadow of the moving object, for example, rendering of the moving object, the environment, and the UI interface. In some examples, rendering of the moving object and the environment may be before shadow rendering. In this case, rendering in step S107 may be rendering of the image except the ambient shadow, the shadow of the moving object, the moving object, and the environment, for example, rendering of the UI interface.

In some examples, during performing of step S104 to obtain the image data of the ambient shadow, step S105 may be performed to render the shadow of the moving object. In some examples, during performing of step S106 to obtain the image data of the shadow of the moving object, step S107 may be performed to perform corresponding rendering based on the rendering instruction stream, to complete rendering of the real image.

S108: Output the real image based on the all image data of the real image. After the all image data of the real image is obtained, the real image is generated based on the all image data of the real image, and the real image is displayed.

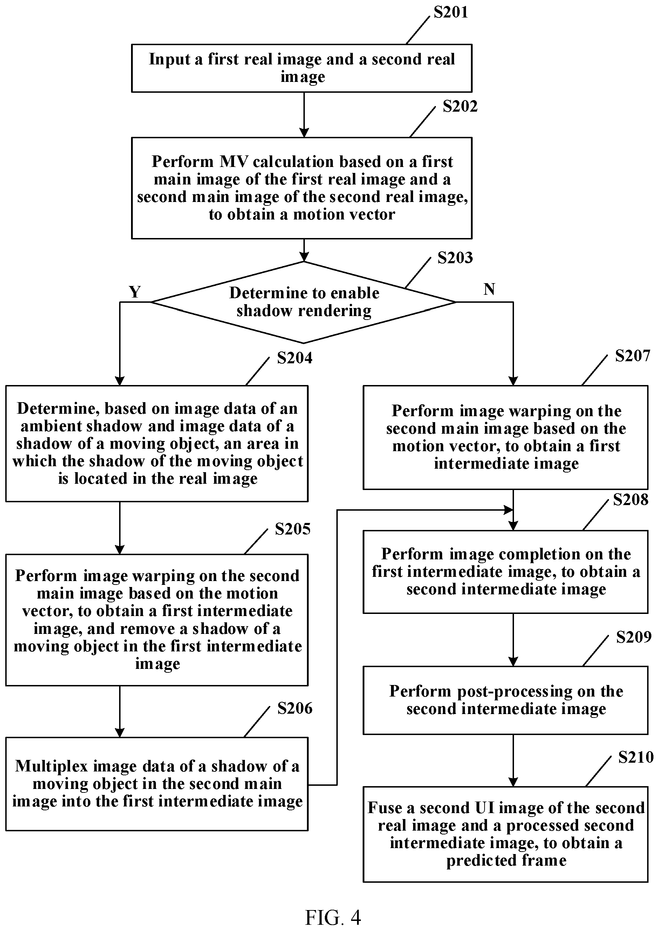

In the procedure shown in FIG. 3, the image data of the ambient shadow and the image data of the shadow of the moving object are obtained in a process in which the real image is generated. FIG. 4 shows a procedure of generating a predicted frame. Image data of an ambient shadow and image data of a shadow of a moving object are used in a process in which the predicted frame is generated. The procedure may include the following steps.

S201: Input a first real image and a second real image.

S202: Perform MV calculation based on a first main image of the first real image and a second main image of the second real image, to obtain a motion vector. In other words, MV calculation is performed on the first main image and the second main image, to obtain the motion vector. The motion vector indicates a movement direction and a movement speed of each object in the second main image.

S203: Determine whether to enable shadow rendering, and if enabling shadow rendering, perform step S204; or if not enabling shadow rendering, perform step S208. For the determining whether to enable shadow rendering, refer to the foregoing step S102. Details are not described herein again.

S204: Determine, based on the image data of the ambient shadow and the image data of the shadow of the moving object, an area in which the shadow of the moving object is located in the real image.

S205: Perform image warping on the second main image based on the motion vector, to obtain a first intermediate image, and remove a shadow of a moving object in the first intermediate image.

Performing image warping on the second main image based on the motion vector is mainly moving each object in the second main image by using the motion vector, and is specifically moving any object in the second main image based on a movement direction and a movement speed of the object in the motion vector. The second main image includes an environment, an ambient shadow, a moving object, and a shadow of the moving object. When each object in the second main image is moved based on the motion vector, the moving object and the environment of the second main image are first separated. In this case, the environment and the shadow of the moving object are separated from the moving object. In other words, the second main image are separated into two parts. A first part includes the environment, the ambient shadow, and the shadow of the moving object, and a second part includes the moving object.

Then, each object in the first part is moved by using a movement direction and a movement speed of the object in the first part in the motion vector; and then, the moving object is moved by using a movement direction and a movement speed of the moving object in the second part in the motion vector. In some examples, when the shadow of the moving object is moved, multiplexing the image data of the shadow of the moving object in the real image is prohibited. In this manner, the shadow of the moving object in the first intermediate image is removed, and removing of the shadow of the moving object can be completed in a process in which the first intermediate image is generated. In some examples, after the first intermediate image is generated, the shadow of the moving object in the first intermediate image is then removed. In either case, the first intermediate image obtained in step S205 is a frame of image with the environment, the ambient shadow, and the moving object, but the shadow of the moving object is removed from the image.

An objective of removing the shadow of the moving object is to mark a location of the shadow of the moving object in the first intermediate image. The image data of the shadow of the moving object in the real image is not used at the marked location in the process in which the first intermediate image is generated, to reserve a to-be-completed area with a pixel value to be completed at the marked location. The marked location of the shadow of the moving object in the first intermediate image is obtained by moving the shadow of the moving object in the real image based on the motion vector. Therefore, the marked location of the shadow of the moving object in the first intermediate image is different from a location of the shadow of the moving object in the real image.

S206: Multiplex image data of the shadow of the moving object in the second main image into the first intermediate image.

In some examples, multiplexing the image data of the shadow of the moving object in the second main image is not only multiplexing the image data but also multiplexing the location of the shadow of the moving object in the second main image, so that the shadow of the moving object in the second main image is pasted in the first intermediate image. However, the marked location of the shadow of the moving object in the first intermediate image is different from the location of the shadow of the moving object in the second main image. Therefore, after the image data of the shadow of the moving object is multiplexed, the to-be-completed area with the pixel value to be completed still exists at the marked location of the shadow of the moving object in the first intermediate image. A pixel value of each pixel point in the to-be-completed area is obtained through image completion.

S207: Perform image warping on the second main image based on the motion vector, to obtain the first intermediate image.

S208: Perform image completion (HoleFilling) on the first intermediate image, to obtain a second intermediate image.

Because the first intermediate image is obtained by moving each object in the second main image, movement speeds and movement directions of the objects in the second main image may be different, resulting in an image data loss in the first intermediate image. An area with the image data loss may be referred to as the to-be-completed area. The pixel value of each pixel point in the to-be-completed area is obtained through image completion.

In an implementation, the pixel value of each pixel point in the to-be-completed area may be completed by using a deep learning network. In another implementation, the pixel value of each pixel point in the to-be-completed area may be completed by using a conventional image inpainting operation. In another implementation, the pixel value of each pixel point in the to-be-completed area is completed by using a mask (Mask) image of the first intermediate image. This is used for determining some static pixel points corresponding to a to-be-completed pixel point. Pixel values of the static pixel points are used for determining a pixel value of the to-be-completed pixel point.

Three types of pixel points are included in the mask image. One type is the to-be-completed pixel point, one type is the static pixel point, and one type is a dynamic pixel point. The to-be-completed pixel point is a pixel point on which pixel value completion needs to be performed in a to-be-completed area (the same as the first intermediate image) of the mask image. Generally, the moving object and the shadow of the moving object separately correspond to one to-be-completed area. The to-be-completed area may be a blank area. In this case, a pixel point in a blank area near the moving object is a to-be-completed pixel point, and a pixel point in a blank area near the shadow of the moving object is a to-be-completed pixel point. The static pixel point is a pixel point corresponding to an environment in a static state in the mask image, and the pixel value of the static pixel point may be used for determining the pixel value of the to-be-completed pixel point. The dynamic pixel point is a pixel point corresponding to an object (or referred to as the moving object) in a moving state in the mask image, and a pixel value of the dynamic pixel point may not be used for determining the pixel value of the to-be-completed pixel point.

In other words, the static pixel point is a valid reference point used for completing the to-be-completed pixel point, and the dynamic pixel point is an invalid reference point used for completing the to-be-completed pixel point. In the mask image, the foregoing three types of pixel points may be distinguished by using a grayscale value. Grayscale values of the three types of pixel points are different. A grayscale value of the to-be-completed pixel point is a first grayscale value, a grayscale value of the static pixel point is a second grayscale value, and a grayscale value of the dynamic pixel point is a third grayscale value. The first grayscale value, the second grayscale value, and the third grayscale value are not equal to each other. For example, the grayscale value of the static pixel point is 0, the grayscale value of the dynamic pixel point is 1, and the grayscale value of the to-be-completed pixel point is 0.5.

For each to-be-completed pixel point in the mask image, the electronic device determines a group of valid static pixel points corresponding to the to-be-completed pixel point in the mask image, and a pixel value of the to-be-completed pixel point is determined based on pixel values of the group of valid static pixel points in the first intermediate image. In a possible implementation, the pixel values of the group of valid static pixel points in the first intermediate image are weighted averaged to be used as the pixel value of the to-be-completed pixel point. The electronic device performs pixel value padding on the first intermediate image based on a pixel value of each to-be-completed pixel point, to obtain the second intermediate image.

Pixel spacings between a group of valid static pixel points corresponding to a to-be-completed pixel point and the to-be-completed pixel point are equal to each other. In addition, compared with other static pixel points (which may be referred to as invalid static pixel points), the pixel spacings between the group of valid static pixel points and the to-be-completed pixel are the smallest.

S209: Perform post-processing (PostProcess) on the second intermediate image. In some examples, post-processing is mainly performing image filtering on the second intermediate image.

S210: Fuse a second UI image of the second real image and a processed second intermediate image, to obtain the predicted frame.

It may be learned from the foregoing FIG. 3 and FIG. 4 that the image data of the ambient shadow and the image data of the shadow of the moving object are obtained in a process in which the real image is generated. In a process in which the predicted frame is generated, the location of the shadow of the moving object in the real image is determined by using the image data of the ambient shadow and the image data of the shadow of the moving object, and the shadow of the moving object generated based on the motion vector is removed by using the location of the shadow of the moving object in the real image, to mark the location of the shadow of the moving object generated based on the motion vector in the image. Then, the image data of the shadow of the moving object in the real image is multiplexed, to generate the shadow of the moving object in the predicted frame. In this way, the shadow of the moving object in the predicted frame can be extracted from the environment of the predicted frame, so that the shadow of the moving object in the predicted frame is generated through multiplexing the image data of the shadow of the moving object in the real image in the predicted frame instead of depending on the motion vector. This alleviates a shadow jitter problem in the predicted frame, reduces a difference between the predicted frame and the real image, and improves user experience.

In addition, in a scenario of resolving the shadow jitter problem in the predicted frame, the image processing method shown in the foregoing FIG. 3 and FIG. 4 mainly involves four parts: 1. Obtain the image data of the ambient shadow and the image data of the shadow of the moving object in the real image. 2. Determine the location of the shadow of the moving object in the real image. 3. Remove the shadow of the moving object generated based on the motion vector. 4. Multiplex the image data of the shadow of the moving object in the real image. The following describes the four parts with reference to the accompanying drawings.

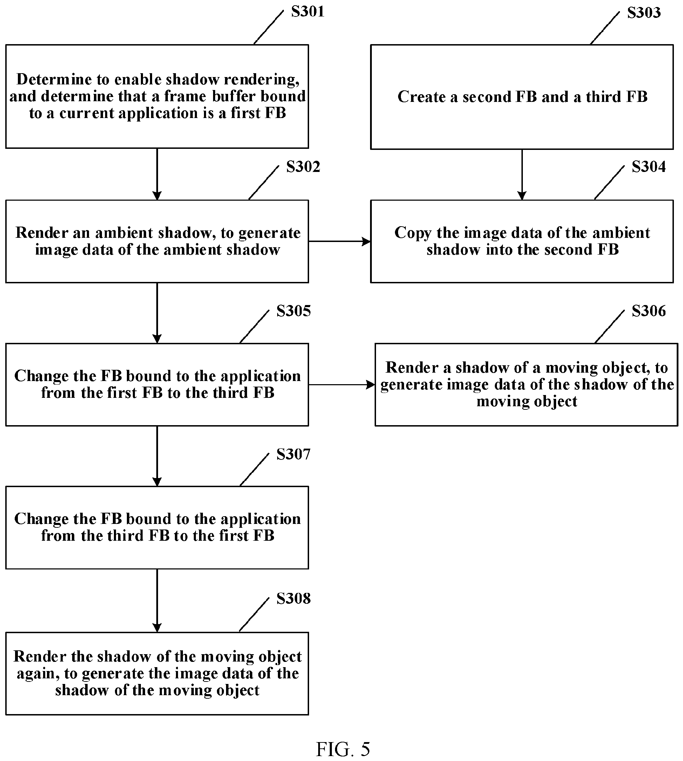

FIG. 5 shows a procedure of obtaining image data of an ambient shadow and image data of a shadow of a moving object in a real image. The procedure may include the following steps.

S301: Determine to enable shadow rendering, and determine that a frame buffer (Frame Buffer, FB) bound to a current application is a first FB. The first FB may be a Game FB, the first FB may be used as a default FB of the application, and image data obtained through corresponding rendering performed based on a rendering instruction stream may be stored in the Game FB. For the determining to enable shadow rendering, refer to the foregoing step S102. Details are not described herein again.

S302: Render the ambient shadow, to generate the image data of the ambient shadow. The rendering instruction stream of the application indicates to render the ambient shadow first, and then overlap the shadow of the moving object on the ambient shadow, to prevent the ambient shadow from overlapping on the shadow of the moving object. Therefore, in this embodiment, the ambient shadow is rendered first, and the image data of the ambient shadow is stored in the first FB.

S303: Create a second FB and a third FB. The second FB may be an Ambient FB, and the third FB may be a Human FB. An objective of creating the second FB and the third FB is to respectively use the two FBs to store the image data of the ambient shadow and the image data of the shadow of the moving object in the process in which the real image is generated, to intercept the image data of the ambient shadow and the image data of the shadow of the moving object in the process in which the real image is generated.

In some examples, step S303 is performed after determining to enable shadow rendering. In other words, step S303 and step S302 may be performed in parallel. In some examples, step S303 may be performed before step S302. This is not limited herein.

S304: Copy the image data of the ambient shadow into the second FB, to implement independent storage of the image data of the ambient shadow by using the second FB, to intercept the image data of the ambient shadow when generation of the real image is not hindered. In some examples, a glBlitFramebuffer () function is invoked, to copy the image data of the ambient shadow into the second FB.

S305: Change the FB bound to the application from the first FB to the third FB. In a possible implementation, a glBindFrameBuffer (Gl_DRAW_BUFFER, ID) function is invoked, and the ID is an ID of the third FB, to change the FB bound to the application from the first FB to the third FB.

After rendering of the ambient shadow is completed, the shadow of the moving object may be rendered. If the FB bound to the application is the first FB when the shadow of the moving object is rendered, the image data of the shadow of the moving object is stored in the first FB, the image data of the shadow of the moving object and the image data of the ambient shadow are mixed and stored in the first FB, and it is difficult to obtain the image data of the shadow of the moving object from the first FB. Therefore, before rendering of the shadow of the moving object is started, the FB bound to the application is changed from the first FB to the third FB, and the image data of the shadow of the moving object generated when the shadow of the moving object is rendered is stored in the third FB, to intercept the image data of the shadow of the moving object in the process in which the real image is generated.

S306: Render the shadow of the moving object, to generate the image data of the shadow of the moving object.

S307: Change the FB bound to the application from the third FB to the first FB, in other words, revert to the default FB of the application. For example, the glBindFrameBuffer (Gl_DRAW_BUFFER, ID) function is invoked, and the ID is an ID of the first FB, to change the FB bound to the application from the third FB to the first FB.

S308: Render the shadow of the moving object again, to generate the image data of the shadow of the moving object. Because the FB bound to the application is changed to the first FB, the image data of the shadow of the moving object is stored in the first FB. This ensures that a rendering result of the application is unchanged, to be specific, this ensures that the default first FB of the application stores the image data of the ambient shadow and the image data of the shadow of the moving object, the image data of the two parts of shadows can be read from the first FB in the process in which the real image is generated, and the real image is prevented from missing a shadow. In some examples, the image data of the shadow of the moving object may be copied into the first FB after being generated. This can also ensure that the first FB stores the image data of the ambient shadow and the image data of the shadow of the moving object, but copying the image data is less efficient than rendering the shadow of the moving object.

In some examples, the first FB to the third FB may store a pixel value of an R channel in the image data, to reduce occupation of the first FB to the third FB.

It may be learned from the procedure shown in the foregoing FIG. 5 that the image data of the ambient shadow is copied into the second FB after the image data of the ambient shadow is generated, so that both the first FB and the second FB store the image data of the ambient shadow. In addition, the third FB is bound to the application before the image data of the shadow of the moving object is generated. In this way, the image data of the shadow of the moving object may be stored in the third FB when the shadow of the moving object is rendered. This implements storage of the image data of the ambient shadow in the second FB and storage of the image data of the shadow of the moving object in the third FB, so that interception of the image data of the ambient shadow and the image data of the shadow of the moving object is completed in the process in which the real image is generated. In addition, the image data of the ambient shadow and the image data of the shadow of the moving object are respectively stored in different FBs, preventing the two parts of image data from overlapping and being difficult to distinguish. When the image data of the ambient shadow and the image data of the shadow of the moving object are intercepted, the image data of the ambient shadow and the image data of the shadow of the moving object can be stored in the default first FB of the application. This ensures accuracy of the image data stored in the first FB and prevents the real image from missing a shadow.

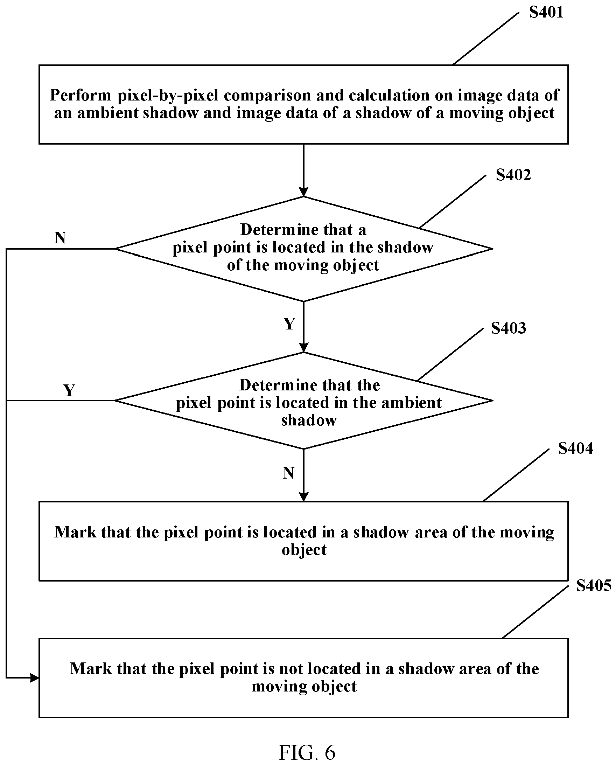

Logic of shadow rendering of the application is that when the shadow of the moving object is located in the ambient shadow, the shadow of the moving object is not displayed in the real image, and therefore, whether the shadow of the moving object is located in the ambient shadow is determined by using the image data of the ambient shadow and the image data of the shadow of the moving object. In this way, the location of the shadow of the moving object in the real image is determined. FIG. 6 shows a procedure of determining a location of a shadow of a moving object in a real image, and the following steps may be included.

S401: Perform pixel point-by-pixel point comparison and calculation on image data of an ambient shadow and image data of the shadow of the moving object.

In this embodiment, an ambient-shadow texture image may be generated by using the image data of the ambient shadow, and a moving-obj ect-shadow texture image may be generated by using the image data of the shadow of the moving object. Performing pixel point-by-pixel point comparison and calculation may be performing comparison and calculation on pixel points with same coordinates in the ambient-shadow texture image and the moving-object-shadow texture image.

S402: Determine, for each pixel point, whether the pixel point is located in the shadow of the moving object, and if the pixel point is located in the shadow of the moving object, perform step S403; or if the pixel point is not located in the shadow of the moving object, perform step S405.

S403: Determine whether the pixel point is located in the ambient shadow, and if the pixel point is not located in the ambient shadow, perform step S404; or if the pixel point is located in the ambient shadow, perform step S405.

S404: Mark that the pixel point is located in a shadow area of the moving object.

S405: Mark that the pixel point is not located in a shadow area of the moving object.

When the pixel point is located in the shadow of the moving object but is not located in the ambient shadow, it indicates that the pixel point is a pixel point in the shadow of the moving object, and it is marked that the pixel point is located in the shadow area of the moving object. When the pixel point is not located in the shadow of the moving object, it indicates that the pixel point is not a pixel point in the shadow of the moving object, and it is marked that the pixel point is not located in the shadow area of the moving object. When the pixel point is located in the shadow of the moving object and is also located in the ambient shadow, it indicates that the pixel point is a pixel point in the shadow of the moving object, and is also a pixel point in the ambient shadow. Based on a principle that "the shadow of the moving object is not displayed in the real image when the shadow of the moving object is located in the ambient shadow", it is marked that the pixel point is not located in the shadow area of the moving object.

In a possible implementation, whether the pixel point is located in the shadow of the moving object or is located in the ambient shadow is determined based on a pixel value of the pixel point. For example, hunman = texture (humanShadow, texCoords).r is used for obtaining a pixel value of a pixel point with texCoords as coordinates in an r channel (sometimes referred to as an R channel) from the moving-object-shadow texture image humanShadow; and ambient = texture (ambientShadow, texCoords).r is used for obtaining a pixel value of a pixel point with texCoords as coordinates in an r channel from the ambient-shadow texture image ambientShadow. In other words, pixel values of pixel points with the same coordinates in the r channel are obtained from the moving-object-shadow texture image humanShadow and the ambient-shadow texture image ambientShadow through hunman = texture (humanShadow, texCoords).r and ambient = texture (ambientShadow, texCoords).r.

If ambient > hunman, it indicates that the pixel point is located in the shadow of the moving object, and the pixel point is marked as being located in the shadow area of the moving object. If ambient ≤ hunman, it indicates that the pixel point is located in the ambient shadow, and the pixel point is marked as not being located in the shadow area of the moving object. In this way, the two texture images are sampled through the foregoing hunman = texture (humanShadow, texCoords).r and ambient = texture (ambientShadow, texCoords).r, to obtain the pixel values of the pixel points with the same coordinates in the r channel in the two texture images, and then it is determined, by using a size relationship of the pixel values, whether the pixel point is located in the shadow area of the moving object or is not located in the shadow area of the moving object.

After comparison of all pixel points is completed, a mask image is obtained. The mask image represents the shadow area of the moving object in the real image. For example, when marking the pixel point, a pixel point located in the shadow area of the moving object is marked as 1, and a pixel point not located in the shadow area of the moving object is marked as 0. An area in which the shadow of the moving object is located in the real image is determined through 1 and 0, to determine the location of the shadow of the moving object in the real image, to be specific, to determine the location of the shadow of the moving object in a main image of the real image.

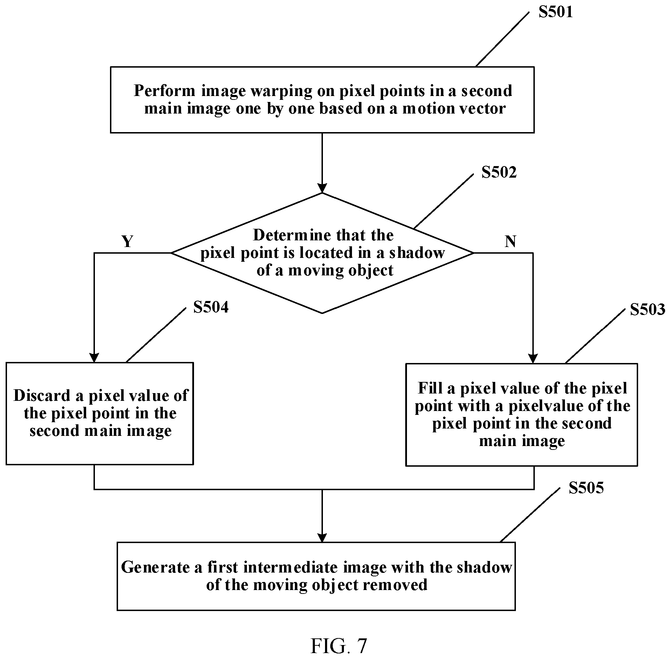

FIG. 7 shows a procedure of removing a shadow of a moving object generated based on a motion vector. An example in which a shadow of a moving object in a first intermediate image is removed in a process in which the first intermediate image is generated based on the motion vector is used for description, and the following steps may be included.

S501: Perform image warping on pixel points in a second main image one by one based on the motion vector. The motion vector records a movement direction and a movement speed of each pixel point in the second main image. For each pixel point in the second main image, image warping is moving the pixel point based on the movement direction and the movement speed of the pixel point. Each time a pixel point is moved, whether the pixel point is located in the shadow of the moving object is determined, to determine a pixel value of the pixel point based on a determining result.

S502: Determine, based on a location of the shadow of the moving object in the second main image, whether the pixel point is located in the shadow of the moving object, and if the pixel point is not located in the shadow of the moving object, perform step S503; or if the pixel point is located in the shadow of the moving object, perform step S504.

It may be understood that each pixel point located in the shadow of the moving object in the second main image is still located in the shadow of the moving object after being moved. Based on this principle, when image warping is performed on the pixel point, whether the pixel point is located in the shadow of the moving object in the second main image is determined. If the pixel point is located in the shadow of the moving object in the second main image, it is determined that the pixel point is located in the shadow of the moving object; otherwise, it is determined that the pixel point is not located in the shadow of the moving object.

In another implementation, the location of the shadow of the moving object in the second main image may be learned, and the location of the shadow of the moving object in the first intermediate image can be determined in advance based on a movement direction and a movement speed that match the shadow of the moving object in the motion vector. After movement of any pixel point in the second main image is completed, whether the pixel point is located in the shadow of the moving object in the first intermediate image is determined based on coordinates of the pixel point in the first intermediate image and the location of the shadow of the moving object in the first intermediate image. For example, if the coordinates of the pixel point in the first intermediate image are the same as coordinates of a pixel point in the shadow of the moving object in the first intermediate image, it is determined that the pixel point is located in the shadow of the moving object in the first intermediate image; otherwise, it is determined that the pixel point is not located in the shadow of the moving object in the first intermediate image.

For another example, a mask image is generated based on the location of the shadow of the moving object in the first intermediate image. A pixel point located in a shadow area of the moving object in the mask image is marked as 1, and a pixel point not located in the shadow area of the moving object is marked as 0. After movement of any pixel point in the second main image is completed, based on coordinates of the pixel point in the first intermediate image, a pixel value of the pixel point with the coordinates is searched for in the mask image. If the pixel value of the pixel point with the coordinates is 1, it is determined that the pixel point is located in the shadow of the moving object; otherwise, it is determined that the pixel point is not located in the shadow of the moving object.

S503: Fill the pixel value of the pixel point with the pixel value of the pixel point in the second main image.

S504: Discard the pixel value of the pixel point in the second main image. If the pixel value of the pixel point is set to a preset value, for example, the preset value may be (RGBA == 1.0, 1.0, 1.0, 0.25), the shadow of the moving object in the first intermediate image is distinguished from another object in the first intermediate image by using the preset value, so that the shadow of the moving object in the first intermediate image is removed by using the preset value, and the location of the shadow of the moving object in the first intermediate image can be marked.

S505: Generate, after image warping on each pixel point in the second main image is completed, a first intermediate image with the shadow of the moving object removed, to obtain a frame of first intermediate image with an environment, an ambient shadow, and the moving object, and with the shadow of the moving object removed. That the shadow of the moving object is removed may be that a pixel value of each pixel point in the shadow of the moving object in the first intermediate image is the preset value.

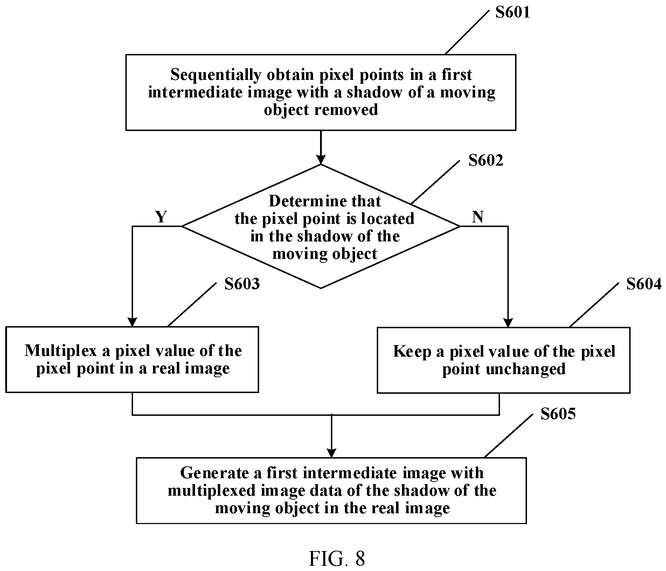

FIG. 8 is a procedure of multiplexing image data of a shadow of a moving object in a real image according to this application, and the following steps may be included.

S601: Sequentially obtain pixel points in a first intermediate image with the shadow of the moving object removed.

S602: Determine, for each pixel point, based on a location of the shadow of the moving object in the real image, whether the pixel point is located in the shadow of the moving object, and if the pixel point is located in the shadow of the moving object, perform step S603; or if the pixel point is not located in the shadow of the moving object, perform step S604.

In this case, whether the pixel point is located in the shadow of the moving object means whether the pixel point is located in the shadow of the moving object in the real image, and specifically, means whether the pixel point is located in the shadow of the moving object in a main image of the real image. In a possible implementation, the location of the shadow of the moving object in the real image may be represented by using coordinates of each pixel point located in the shadow of the moving object. If coordinates of a pixel point in the first intermediate image with the shadow of the moving object removed are the same as coordinates of a pixel point in the shadow of the moving object, it is determined that the pixel point in the first intermediate image with the shadow of the moving object removed is located in the shadow of the moving object; otherwise, it is determined that the pixel point in the first intermediate image with the shadow of the moving object removed is not located in the shadow of the moving object.

In a possible implementation, the location of the shadow of the moving object in the real image is represented by using the mask image obtained in the foregoing FIG. 6, and is specifically represented by using a pixel point with a pixel value in the mask image being 1. In this case, when determining whether the pixel point in the first intermediate image with the shadow of the moving object removed is located in the shadow of the moving object, coordinates of the pixel point are used to search for a pixel value of the pixel point with the coordinates in the mask image. If the pixel value of the pixel point with the coordinates is 1, it is determined that the pixel point is located in the shadow of the moving object; otherwise, it is determined that the pixel point is not located in the shadow of the moving object.

S603: Multiplex a pixel value of the pixel point in the real image. In other words, the pixel value of the pixel point is filled with the pixel value of the pixel point in the real image. Because the pixel point with the pixel value multiplexed is located in the shadow of the moving object, multiplexing herein is multiplexing image data of the shadow of the moving object in the real image.

S604: Keep the pixel value of the pixel point unchanged.

S605: Generate a first intermediate image with the multiplexed image data of the shadow of the moving object in the real image, to generate a first intermediate image with the shadow of the moving object.

It may be learned from FIG. 8 that the image data of the shadow of the moving object in the real image can be fused into the first intermediate image by using the first intermediate image with the shadow of the moving object removed, the location of the shadow of the moving object in the real image, and the image data of the shadow of the moving object in the real image, to easily obtain the first intermediate image with the shadow of the moving object through fusing, implement multiplexing of the image data of the shadow of the moving object in the real image, avoid continuing to use a motion vector used for an environment to generate the shadow of the moving object, alleviate a shadow jitter problem in a predicted frame, reduce a difference between the predicted frame and the real image, and improve user experience.

In this embodiment, some pixel points (the foregoing to-be-completed pixel points) with unassigned pixel values still exist in the first intermediate image with the shadow of the moving object. After the first intermediate image with the shadow of the moving object is generated, image completion is performed on the first intermediate image, and then post-processing and fusing are performed, to generate the predicted frame.

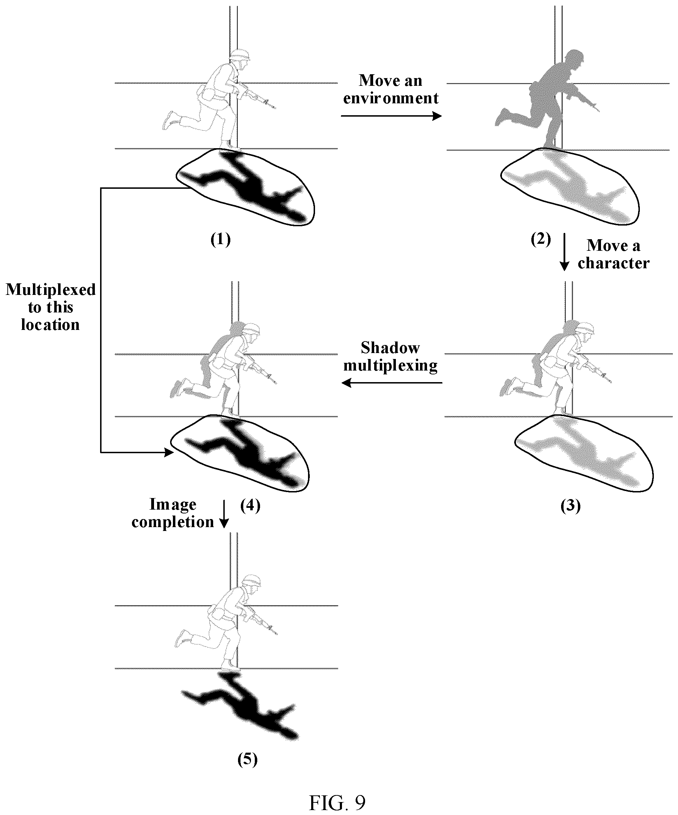

A game application is used as an example for description. (1) in FIG. 9 shows a frame of real image for generating a predicted frame. In a process in which a real image is generated, a location (for example, a location circled by an irregular graphic in (1) in FIG. 9) of a shadow of a character in the real image is determined. Image warping is performed on an environment of the real image by using a motion vector, to obtain an intermediate image shown in (2) in FIG. 9. The shadow of the character and the character are removed from the intermediate image. Then, image warping is performed on the character, to obtain an intermediate image shown in (3) in FIG. 9. The shadow of the character is removed from the intermediate image, and a to-be-completed area exists near the character.

Shadow rendering is performed on the intermediate image shown in (3) in FIG. 9. During shadow rendering, image data of the shadow of the character in the real image shown in (1) in FIG. 9 is directly copied into the intermediate image shown in (3) in FIG. 9, to obtain an image shown in (4) in FIG. 9. A to-be-completed area exists near both a character in the image and a shadow of the character. Image completion is performed on each pixel point in the to-be-completed area, to obtain an image shown in (5) in FIG. 9. A shadow of a character in the image shown in (5) in FIG. 9 is obtained by multiplexing the shadow of the character shown in (1) in FIG. 9. Therefore, the shadows of the characters in the two frames of images are the same. Specifically, image data of the shadows of the characters in the two frames of images is the same and locations of the shadows of the characters in the images are the same.

In addition, this application further provides an electronic device, including: one or more processors and a memory, where the memory is configured to store computer program code, the computer program code includes computer instructions, and when the one or more processors execute the computer instructions, the electronic device performs the foregoing image processing method.

This application further provides a computer-readable storage medium, configured to store a computer program, where the computer program, when executed, is specifically used for implementing the foregoing image processing method.

This application further provides a computer program product including instructions, where the computer program product, when run on a computer or a processor, causes the computer or the processor to perform the foregoing image processing method.

## Claims

1. An image processing method, applied to an electronic device and comprising:
obtaining a first main image from a first real image and obtaining a second main image from a second real image, wherein the first real image and the second real image are images obtained through rendering by the electronic device;
performing motion vector calculation on the first main image and the second main image, to obtain a motion vector;
warping an environment in a target main image and a moving object in the target main image based on the motion vector, to generate an environment in a predicted frame and a moving object in the predicted frame, wherein the target main image is a frame of main image in the first main image and the second main image; and
multiplexing image data of a shadow of the moving object in the target main image into the predicted frame, to generate a shadow of the moving object in the predicted frame.

2. The method according to claim 1, wherein the multiplexing image data of a shadow of the moving object in the target main image into the predicted frame comprises:
determining, for each pixel point in the predicted frame, based on a location of the shadow of the moving object in the target main image, whether the pixel point is located in the shadow of the moving object in the target main image; and
multiplexing, after determining that the pixel point is located in the shadow of the moving object in the target main image, a pixel value of the pixel point in the target main image, wherein the pixel value of the pixel point in the target main image is image data of the pixel point in the target main image; or
keeping a pixel value of the pixel point unchanged after determining that the pixel point is not located in the shadow of the moving object in the target main image.

3. The method according to claim 1, wherein the motion vector is used for recording a movement speed and a movement direction of each pixel point in the target main image, and the warping an environment in a target main image and a moving object in the target main image based on the motion vector, to generate an environment in a predicted frame and a moving object in the predicted frame comprises:
moving each pixel point in the target main image based on the movement speed and the movement direction of the pixel point in the target main image;
determining, during movement of the pixel point, based on a location of the shadow of the moving object in the target main image, whether the pixel point is located in the shadow of the moving object in the predicted frame; and
setting a pixel value of the pixel point to a preset value after determining that the pixel point is located in the shadow of the moving object in the predicted frame; or
setting a pixel value of the pixel point to a pixel value of the pixel point in the target main image after determining that the pixel point is not located in the shadow of the moving object in the predicted frame.

4. The method according to claim 3, wherein the preset value comprises preset transparency, and the preset transparency is different from transparency of another pixel point in the target main image.

5. The method according to any one of claims 2 to 4, wherein a process of determining the location of the shadow of the moving object in the target main image comprises:
comparing to-be-compared pixel points with a same location in an ambient-shadow texture image and a moving-object-shadow texture image, wherein the ambient-shadow texture image is generated based on image data of an ambient shadow in the target main image, and the moving-object-shadow texture image is generated based on the image data of the shadow of the moving object in the target main image;
marking, after determining that the to-be-compared pixel point is located in a shadow area of the moving object but is not located in the ambient shadow, that the to-be-compared pixel point is located in the shadow area of the moving object; or
marking, after determining that the to-be-compared pixel point is located in a shadow area of the moving object and is located in the ambient shadow, that the to-be-compared pixel point is not located in the shadow area of the moving object; and
determining the location of the shadow of the moving object in the target main image based on the to-be-compared pixel point marked as being located in the shadow area of the moving object, wherein the image data of the shadow of the moving object in the target main image comprises a pixel value of the to-be-compared pixel point at the location in the target main image.

6. The method according to claim 5, wherein if a pixel value of the to-be-compared pixel point in the moving-object-shadow texture image is greater than a pixel value of the to-be-compared pixel point in the ambient-shadow texture image, it is determined that the to-be-compared pixel point is located in the shadow area of the moving object but is not located in the ambient shadow; or
if a pixel value of the to-be-compared pixel point in the moving-object-shadow texture image is less than or equal to a pixel value of the to-be-compared pixel point in the ambient-shadow texture image, it is determined that the to-be-compared pixel point is located in the shadow area of the moving object and is located in the ambient shadow.

7. The method according to claim 6, wherein the pixel value of the to-be-compared pixel point comprises at least one of an R channel value, a G channel value, and a B channel value of the to-be-compared pixel point.

8. The method according to any one of claims 1 to 7, wherein before the obtaining a first main image from a first real image and obtaining a second main image from a second real image, the method further comprises:
obtaining the image data of the ambient shadow and the image data of the shadow of the moving object when rendering a real image corresponding to the target main image, wherein the image data of the ambient shadow and the image data of the shadow of the moving object are used for determining the location of the shadow of the moving object in the target main image, and the location of the shadow of the moving object in the target main image and the image data of the shadow of the moving object are used for obtaining image data of a shadow of a to-be-multiplexed moving object in the target main image.

9. The method according to claim 8, wherein the obtaining the image data of the ambient shadow and the image data of the shadow of the moving object when rendering a real image corresponding to the target main image comprises:
rendering an ambient shadow of the real image, to generate the image data of the ambient shadow, wherein the image data of the ambient shadow is stored in a first frame buffer;
creating a second frame buffer and a third frame buffer;
copying the image data of the ambient shadow stored in the first frame buffer into the second frame buffer;
changing a frame buffer bound to the real image from the first frame buffer to the third frame buffer; and
rendering a shadow of a moving object in the real image, to generate the image data of the shadow of the moving object, wherein the image data of the shadow of the moving object is stored in the third frame buffer.

10. The method according to claim 9, wherein the obtaining the image data of the ambient shadow and the image data of the shadow of the moving object when rendering a real image corresponding to the target main image further comprises:
changing the frame buffer bound to the real image from the third frame buffer to the first frame buffer after rendering the shadow of the moving object in the real image; and
rendering the shadow of the moving object in the real image again, to generate the image data of the shadow of the moving object, wherein the image data of the shadow of the moving object is stored in the first frame buffer.

11. The method according to claim 9 or 10, wherein the copying the image data of the ambient shadow stored in the first frame buffer into the second frame buffer comprises: invoking a glBlitFramebuffer function to copy the image data of the ambient shadow stored in the first frame buffer into the second frame buffer.

12. The method according to any one of claims 9 to 11, wherein the changing a frame buffer bound to the real image from the first frame buffer to the third frame buffer comprises: invoking the glBlitFramebuffer function to change the frame buffer bound to the real image from the first frame buffer to the third frame buffer.

13. The method according to any one of claims 1 to 12, wherein the method further comprises: performing image completion on the predicted frame after generating the shadow of the moving object in the predicted frame.

14. An electronic device, comprising:
one or more processors and a memory, wherein
the memory is configured to store computer program code, the computer program code comprises computer instructions, and when the one or more processors execute the computer instructions, the electronic device performs the image processing method according to any one of claims 1 to 13.

15. A computer-readable storage medium, configured to store a computer program, wherein the computer program, when executed, is specifically used for implementing the image processing method according to any one of claims 1 to 13.
